# EUROPÄISCHE PATENTSCHRIFT

(11) **EP 2 585 322 B1**
(45) Veröffentlichungstag und Bekanntmachung des Hinweises auf die Patenterteilung: **22.01.2014**
(21) Anmeldenummer: 11708728.8
(22) Anmeldetag: 10.03.2011
(51) Int. Cl.: B60G 17/04, B60G 17/052, F04B 39/16, F04B 53/20

(54) **LUFTVERSORGUNGSEINRICHTUNG FÜR EIN FAHRZEUG MIT PNEUMATISCHEN EINRICHTUNGEN**
AIR SUPPLY DEVICE FOR A VEHICLE WITH PNEUMATIC EQUIPMENT
DISPOSITIF D'ALIMENTATION EN AIR POUR UN VEHICULE AVEC DES ÉQUIPEMENTS PNEUMATIQUES

(30) Priorität: 24.06.2010 DE 102010024889
(43) Veröffentlichungstag der Anmeldung: 01.05.2013
(73) Patentinhaber: WABCO GmbH, 30453 Hannover (DE)
(72) Erfinder: BODET, Marc-Michel, 30989 Northen (DE); STABENOW, Uwe, 30880 Laatzen (DE)
(74) Vertreter: Lauerwald, Jörg
(86) Internationale Anmeldenummer: PCT/EP2011/001173
(87) Internationale Veröffentlichungsnummer: WO 2011/160735

(56) Entgegenhaltungen:
- EP-A1- 1 901 934
- EP-A2- 1 306 239
- EP-A2- 1 411 244
- GB-A- 2 344 323

## Beschreibung

Die Erfindung betrifft eine Luftversorgungseinrichtung für eine Luftfeder eines Fahrzeugs, welche einen Luftfilter als Aufbereiter für zuströmende Luft, eine Zuluftleitung, eine Abluftleitung, einen Kompressor und optional einen Lufttrockner umfasst.

Die Erfindung betrifft weiterhin ein Verfahren zur Versorgung eines Luftfedersystems eines Fahrzeugs mit Druckluft.

Eine Luftversorgungseinrichtung für eine Luftfederungsanlage eines Kraftfahrzeugs ist bereits aus der EP 1 901 934 B1 bekannt. Diese Luftfederungsanlage weist voneinander getrennte Zuluft- und Abluftleitungen auf, wobei in der Zuluftleitung ein Luftfilter und in der Abluftleitung ein Schalldämpfer angeordnet ist.

Eine ähnliche Luftversorgungseinrichtung mit einem Kompressor und einem Schalldämpfer zeigen die Druckschriften DE 101 21 582 C2 und EP 1 306 293 B1.

Die Druckschriften DE 102 23 405 B4, DE 103 01 119 A1, EP 1 608 521 B1 und DE 10 2004 057 575 A1 zeigen ein Luftfedersystem beziehungsweise eine Niveauregelung für ein Fahrzeug, wobei die Zu- und die Abluft über eine gemeinsame Leitung geführt wird. Eine gemeinsame Leitung für Ansaugluft und Ablassluft hat jedoch den Nachteil, dass Luft beim Ablassen Feuchtigkeit abgibt, die sich in der gemeinsamen Leitung sammelt. Diese Feuchtigkeit wird dann erneut angesaugt.

Daher wird bei Fahrzeugen häufig die Luft für die Drucklufterzeugung an einem Ort im Fahrzeug angesaugt, der sich von dem Ort der Abgabe der entspannten Luft (Entlüftung) unterscheidet. Dadurch müssen Zuluft und Abluft in getrennten Leitungen zu der Baugruppe des Kompressors beziehungsweise zum Luftfederungssystem geführt werden. Die Gründe für die Nutzung verschiedener Orte sind unterschiedlich. Bei einer Ansaugung beispielsweise aus dem Fahrgastraum ist die Zuluft schon verhältnismäßig trocken, was den Trocknungsaufwand nach dem Verdichten verringert. Es hat sich aber auch als günstig erwiesen, die Zuluft beispielsweise direkt hinter dem Kühler des Fahrzeugs zu entnehmen. Die entspannte Abluft kann demgegenüber irgendwo am Fahrzeug ausgelassen werden. Dies geschieht häufig in der unmittelbaren Nähe der Baugruppe des Kompressors oder der Luftfeder.

Der Erfindung liegt die Aufgabe zugrunde, eine Möglichkeit zu schaffen, die Luftversorgungseinrichtung der Luftfedern eines Fahrzeugs kostengünstig zu realisieren.

Diese Aufgabe wird erfindungsgemäß mit einer Vorrichtung gemäß den Merkmalen des Anspruchs 1 gelöst. Die weitere Ausgestaltung der Erfindung ist den Unteransprüchen zu entnehmen.

Erfindungsgemäß ist also eine Vorrichtung vorgesehen, bei der der Aufbereiter zwischen dem Kompressor und einem ersten Rückschlagventil und einem zweiten Rückschlagventil angeordnet ist. Hierdurch ist es möglich, dass ein gemeinsamer Aufbereiter für Ansaug- und Entlüftungsluft in Verbindung mit dem ersten und dem zweiten Rückschlagventil sicherstellt, dass die Luft durch separate Ansaug- und Entlüftungspfade strömen kann. Dabei ist der Aufbereiter für die abströmende Luft als Schalldämpfer und für die zugeführte Luft als Luftfilter und Schalldämpfer ausgebildet. Da Schalldämpfer und Luftfilter beziehungsweise Schalldämpfer nun nicht mehr als getrennte Bauteile im Fahrzeug verbaut werden müssen, kann eines dieser Bauteile eingespart werden, was eine Reduktion der Herstellungskosten und des Bauraums zur Folge hat. Zugleich kann die Abluft beim Durchströmen des Aufbereiters diesen reinigen.

Darüber hinaus ist es möglich, den Weg der Abluft, nachdem diese den im Regenerationsbetrieb betriebenen Lufttrockner durchströmt hat und entsprechend mit Feuchtigkeit aufgeladen ist, innerhalb der für Zu- und Abluft gemeinsamen Leitungen möglichst kurz zu gestalten. So kann vermieden werden, dass sich die Feuchtigkeit aus der Abluft sammelt und erneut angesaugt wird. Hierfür ist es günstig, dass die Zuluftleitung und die Abluftleitung in einem gemeinsamen Abzweig mit dem Aufbereiter verbunden sind. Zwischen Abzweig und Atmosphäre ist die Zuluftleitung um mindestens den Faktor 2 länger als die Abluftleitung. Die Abluftleitung wird so kurz wie konstruktiv möglich ausgeführt und ist in der Regel 15 Zentimeter lang, jedoch nicht länger als 30 Zentimeter.

Vorteilhaft ist es, dass das in der Abluftleitung vorgesehene zweite Rückschlagventil ein Eindringen von Wasser in die Abluftleitung unterbindet. Hierdurch ist es möglich, den Auslass der Abluftleitung, das zweite Rückschlagventil und/oder den Aufbereiter im Bereich der Wattiefe des Fahrzeugs anzuordnen.

Für die Funktion als Schalldämpfer und als Luftfilter ist es günstig, dass der Aufbereiter zum Beispiel aus einem offenporigen Schaummaterial besteht. Dieses Schaummaterial adsorbiert im Filtrationsprozess alle Partikel mit einer Ausdehnung von mehr als 10 Mikrometern bei einem Luftvolumenstrom von 20 bis 50 Liter pro Minute, wobei beim minimalen Luftvolumenstrom der Differenzdruck kleiner oder gleich 0,02 bar ist. Beim Ausblasen durchströmt die Abluft das Schaummaterial des Aufbereiters in gegensätzlicher Richtung mit einem Volumenstrom bis zu 300 Liter pro Minute.

Weiterhin hat es sich als vorteilhaft erwiesen, dass der Aufbereiter und das erste und zweite Rückschlagventil in einem gemeinsamen Gehäuse als ein Modul ausgebildet sind. Hierdurch wird es möglich, die Anforderung an möglichst kurze gemeinsame Leitungswege in idealer Weise zu realisieren. Da das Modul ein geringes Volumen aufweist, sind in dem Modul keine Feuchtigkeitsansammlungen möglich. Das Modul hat ein Volumen von 150 bis 200 Kubikzentimetern.

Für eine Vereinfachung der Montage und zur Vermeidung von weiteren Dichtstellen im Fahrzeug ist es vorteilhaft, dass der Kompressor und der Lufttrockner als eine Baugruppe ausgeführt sind, die einen gemeinsamen Anschluss für die Zuluftleitung und die Abluftleitung hat. Hierdurch ist es möglich, den Aufbereiter und das erste und zweite Rückschlagventil, welche in einem Modul zusammengefasst sind, einfach und schnell mit dem Kompressor und dem eigentlichen Lufttrockner zu verbinden.

Vorteilhaft ist es, dass der Kompressor und der Lufttrockner mit dem Aufbereiter oder dem Modul als eine Baugruppe ausgebildet sind. Hierdurch ist es möglich, sämtliche funktionswesentlichen Komponenten der Drucklufterzeugung auf kleinstem Bauraum hochintegrativ für eine schnelle und einfache Montage im Fahrzeug vorzufertigen. Die geringere Anzahl an Schnittstellen erhöht die Qualität und Dauerhaftigkeit der Luftversorgungseinrichtung.

Die Aufgabe wird erfindungsgemäß weiterhin mit einem Verfahren gemäß den Merkmalen des Anspruchs 10 gelöst.

Erfindungsgemäß ist also ein Verfahren vorgesehen, bei dem zur Versorgung einer Luftfeder eines Fahrzeugs mit Druckluft, die der Luftfeder zuzuführende Luft über eine Zuluftleitung angesaugt, einem als Luftfilter wirkenden Aufbereiter zugeführt, anschließend von einem Kompressor verdichtet und schließlich in einem Lufttrockner entfeuchtet wird, und bei dem die aus der Luftfeder abzuführende Luft zunächst den in einem Regenerationsbetrieb betreibbaren Lufttrockner durchströmt, anschließend über einen Bypass den Kompressor umgeht und durch den als Schalldämpfer wirkenden Aufbereiter über ein zweites Rückschlagventil in der Abluftleitung in die Umgebung entspannt wird.

Das Transportieren der Zuluft von der Atmosphäre zum Kompressor, einschließlich dem dabei stattfindenden Filtern im Aufbereiter, geht einher mit den Verfahrensschritten, dass der Kompressor einen Unterdruck erzeugt, dass durch den Unterdruck das in der Zuluftleitung angeordnete erste Rückschlagventil geöffnet wird und dass das in der Abluftleitung angeordnete zweite Rückschlagventil durch die Federkraft und den Unterdruck verschlossen wird.

Zum Entspannen der Druckluft wird die Abluft aus der Luftfeder zur Umgehung des Kompressors über den Bypass geführt, wonach die Abluft den Aufbereiter durchströmt, das in der Zuluftleitung angeordnete erste Rückschlagventil durch den Druck der Abluft und der Federkraft geschlossen wird und das in der Abluftleitung angeordnete zweite Rückschlagventil von dem Druck der Abluft geöffnet wird.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: einen Schaltplan einer Luftversorgungseinrichtung;
- Fig. 2: eine geschnittene Darstellung eines Moduls mit einem Aufbereiter und dem ersten und zweiten Rückschlagventil der in Figur 1 gezeigten Luftversorgungseinrichtung;
- Fig. 3: eine Explosivdarstellung einer Baugruppe der in Figur 1 gezeigten Luftversorgungseinrichtung.

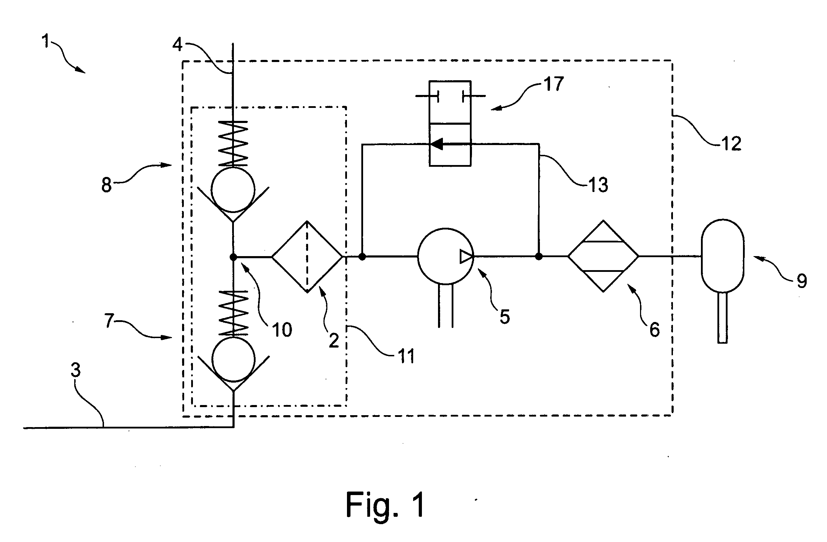

Figur 1 zeigt eine Luftversorgungseinrichtung 1 für ein Luftfedersystem 9 eines hier nicht dargestellten Fahrzeugs. Die Luftversorgungseinrichtung 1 umfasst einen Aufbereiter 2, der die durch eine Zuluftleitung 3 zuströmende Luft filtert. Weiterhin umfasst die Luftversorgungseinrichtung 1 eine Abluftleitung 4, einen Kompressor 5 und optional einen Lufttrockner 6. Die Zuluftleitung 3 und die Abluftleitung 4 sind durch ein erstes Rückschlagventil 7 und ein zweites Rückschlagventil 8 voneinander entkoppelt. Der Aufbereiter 2 ist zwischen dem Kompressor 5 und dem ersten Rückschlagventil 7 und dem zweiten Rückschlagventil 8 angeordnet. Die Zuluftleitung 3 und die Abluftleitung 4 sind in einem gemeinsamen Abzweig 10 mit dem Aufbereiter 2 verbunden.

Zum Transportieren der Zuluft von der Atmosphäre zum Luftfederungssystem 9 wird diese von dem Kompressor 5 angesaugt und in dem Lufttrockner 6 getrocknet. Bevor die Zuluft den Kompressor 5 erreicht, wird sie in dem Aufbereiter 2 gefiltert. Durch den vom Kompressor 5 erzeugten Unterdruck wird das in der Zuluftleitung 3 angeordnete erste Rückschlagventil 7 geöffnet und das in der Abluftleitung 4 angeordnete zweite Rückschlagventil 8 durch die Federkraft und den Unterdruck verschlossen. Beim Entspannen der in der Luftfeder 9 befindlichen Druckluft durchströmt diese den Lufttrockner 6 und regeneriert diesen. Zur Umgehung des Kompressors 5 wird die Abluft durch den Bypass 13 geführt. In dem Bypass 13 befindet sich ein ansteuerbares Ventil 17, welches nur im Fall der Entlüftung geöffnet wird. Danach strömt die Abluft durch den Aufbereiter 2. Das in der Zuluftleitung 3 angeordnete erste Rückschlagventil 7 wird durch den Druck der Abluft und die Federkraft geschlossen und das in der Abluftleitung 4 angeordnete zweite Rückschlagventil 8 wird von dem Druck der Abluft geöffnet.

Bei einer Variante der gezeigten Ausführungsform sind der Aufbereiter 5 und das erste und zweite Rückschlagventil 7, 8 in einem gemeinsamen Gehäuse 14 als ein Modul 11 ausgebildet. Der Kompressor 5 und der Lufttrockner 6 sind mit dem Modul 11 als eine Baugruppe 12 ausgebildet.

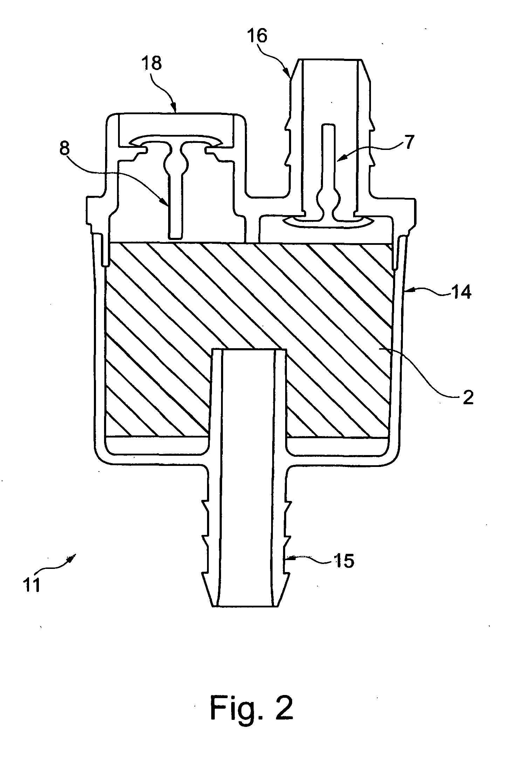

Figur 2 zeigt das in Figur 1 beschriebene Modul 11 in einer geschnittenen Darstellung. In einem gemeinsamen Gehäuse 14 des Moduls 11 befinden sich das erste und zweite Rückschlagventil 7, 8 und der Aufbereiter 2. Das Gehäuse 14 weist einen Anschluss 16 für eine Zuluftleitung und einen weiteren Anschluss 15 für eine Leitung zum Kompressor beziehungsweise zur Baugruppe auf. Optional kann an dem Entlüftungsport 18 eine Entlüftungsleitung angeschlossen werden.

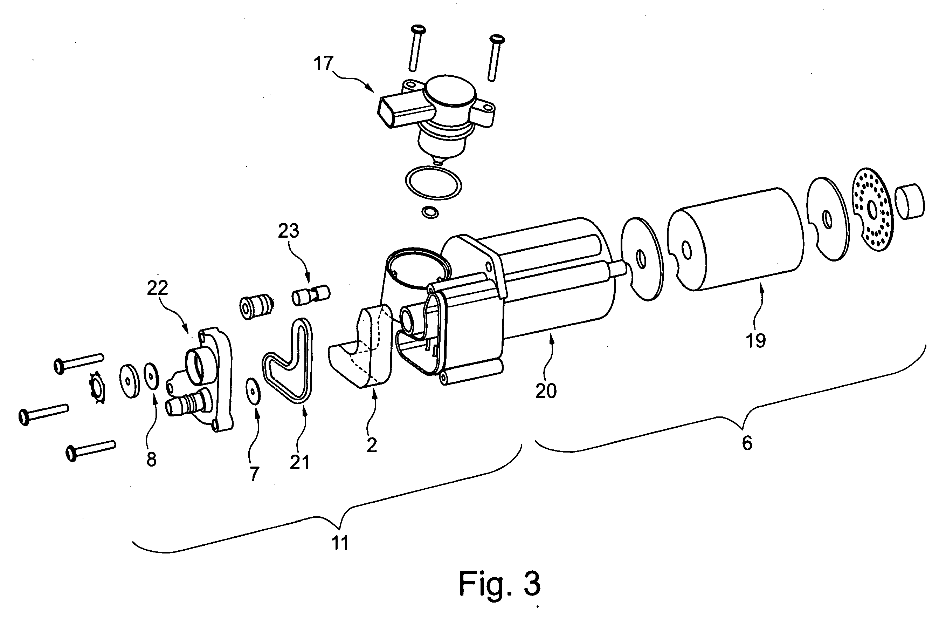

Figur 3 zeigt die in Figur 1 beschriebene Baugruppe 12, bestehend aus dem Lufttrockner 6, dem Modul 11 und dem hier nicht dargestellten Kompressor 5, weist ein Gehäuse 20 mit einer Verschlusskappe 22 auf, welches ein Trockenmittel 19 des Lufttrockners 6, den Aufbereiter 2, das Ventil 17, eine Drossel 21 und das erste und zweite Rückschlagventil 7, 8 aufnimmt.

## Patentansprüche

1. Luftversorgungseinrichtung (1) für ein Luftfedersystem (9) eines Fahrzeugs, die einen Luftfilter als Aufbereiter (2) für zuströmende Luft, eine Zuluftleitung (3), eine Abluftleitung (4) und einen Kompressor (5) umfasst, wobei die Zuluftleitung (3) und die Abluftleitung (4) durch ein erstes Rückschlagventil (7) und ein zweites Rückschlagventil (8) entkoppelt sind, **dadurch gekennzeichnet, dass** der Aufbereiter (2) zwischen dem Kompressor (5) und dem ersten und zweiten Rückschlagventil (7, 8) angeordnet ist.

2. Luftversorgungseinrichtung (1) nach Anspruch 1, **dadurch gekennzeichnet, dass** die Zuluftleitung (3) und die Abluftleitung (4) in einem gemeinsamen Abzweig (10) mit dem Aufbereiter (2) verbunden sind.

3. Luftversorgungseinrichtung (1) nach den Ansprüchen 1 oder 2, **dadurch gekennzeichnet, dass** der Aufbereiter (2) für abströmende Luft als Schalldämpfer ausgebildet ist.

4. Luftversorgungseinrichtung (1) nach zumindest einem der vorhergehenden Ansprüche, **dadurch gekennzeichnet, dass** der Aufbereiter (2) aus einem Schaummaterial besteht.

5. Luftversorgungseinrichtung (1) nach zumindest einem der vorhergehenden Ansprüche, **dadurch gekennzeichnet, dass** der Kompressor (5) und ein Lufttrockner (6) als eine Baugruppe (12) ausgeführt sind.

6. Luftversorgungseinrichtung (1) nach zumindest einem der vorhergehenden Ansprüche, **dadurch gekennzeichnet, dass** die die Baugruppe (12) einen gemeinsamen Anschluss für die Zuluftleitung (3) und die Abluftleitung (4) hat.

7. Luftversorgungseinrichtung (1) nach zumindest einem der vorhergehenden Ansprüche, **dadurch gekennzeichnet, dass** der Aufbereiter (2) und das erste und zweite Rückschlagventil (7, 8) in einem gemeinsamen Gehäuse (14) als ein Modul (11) ausgebildet sind.

8. Luftversorgungseinrichtung (1) nach zumindest einem der vorhergehenden Ansprüche, **dadurch gekennzeichnet, dass** der Kompressor (5) und der Lufttrockner (6) mit dem Aufbereiter (2) oder mit dem Modul (11) als eine Baugruppe (12) ausgebildet sind.

9. Luftversorgungseinrichtung (1) nach zumindest einem der vorhergehenden Ansprüche, **dadurch gekennzeichnet, dass** das erste und zweite Rückschlagventil (7, 8) mit einer Schließkraft belastet sind.

10. Verfahren zur Versorgung einer Luftfeder (9) eines Fahrzeugs mit Druckluft, bei dem die der Luftfeder (9) zuzuführende Luft über eine Zuluftleitung (3) angesaugt, durch ein erstes Rückschlagventil (7) einem als Luftfilter und/oder Schalldämpfer wirkenden Aufbereiter (2) zugeführt, anschließend von einem Kompressor (5) verdichtet und schließlich in einem Lufttrockner (6) entfeuchtet wird, und bei dem die aus der Luftfeder (9) abzuführende Luft zunächst den in einem Regenerationsbetrieb betreibbaren Lufttrockner (6) durchströmt, anschließend über einen abschaltbaren Bypass (13) den Kompressor (5) umgeht und durch einen als Schalldämpfer wirkenden Aufbereiter (2) über ein zweites Rückschlagventil (8) in die Umgebung entspannt wird.

## Claims

1. Air supply device (1) for a pneumatic spring system (9) in a vehicle, which comprises an air filter as a processor (2) for incoming air, an inlet air line (3), an outlet air line (4) and a compressor (5), wherein the inlet air line (3) and the outlet air line (4) are decoupled by a first check valve (7) and a second check valve (8), **characterized in that** the processor (2) is arranged between the compressor (5) and the first and second check valve (7, 8).

2. Air supply device (1) according to Claim 1, **characterized in that** the inlet air line (3) and the outlet air line (4) are connected to the processor (2) in a joint branch line (10).

3. Air supply device (1) according to Claims 1 or 2, **characterized in that** the processor (2) for outgoing air is in the form of a silencer.

4. Air supply device (1) according to at least one of the preceding claims, **characterized in that** the processor (2) is made from a foam material.

5. Air supply device (1) according to at least one of the preceding claims, **characterized in that** the compressor (5) and an air drier (6) are designed as an assembly (12).

6. Air supply device (1) according to at least one of the preceding claims, **characterized in that** the assembly (12) has a joint connection for the inlet air line (3) and the outlet air line (4).

7. Air supply device (1) according to at least one of the preceding claims, **characterized in that** the processor (2) and the first and second check valve (7, 8) are formed in a joint housing (14) as a module (11).

8. Air supply device (1) according to at least one of the preceding claims, **characterized in that** the compressor (5) and the air drier (6) are designed with the processor (2) or the module (11) as an assembly (12).

9. Air supply device (1) according to at least one of the preceding claims, **characterized in that** the first and second check valve (7, 8) are loaded with a closing force.

10. Method of supplying a pneumatic spring (9) in a vehicle with compressed air, in which the air to be supplied to the pneumatic spring (9) is drawn in via an inlet air line (3), fed to a processor (2) acting as an air filter and/or silencer through a first check valve (7), subsequently compressed by a compressor (5) and finally dehumidified in an air drier (6), and in which the air to be discharged from the pneumatic spring (9) first flows through the air drier (6) which can be operated in regeneration mode, then bypasses the compressor (5) via a bypass (13) which can be switched and is relaxed into the environment through the processor (2) acting as a silencer via a second check valve (8).

## Revendications

1. Dispositif d'alimentation en air (1) pour un système de ressort pneumatique (9) d'un véhicule, qui comprend un filtre à air en tant que dispositif de préparation (2) pour l'air affluant, une conduite d'amenée d'air (3), une conduite de sortie d'air (4) et un compresseur (5), la conduite d'amenée d'air (3) et la conduite de sortie d'air (4) étant désaccouplées par un premier clapet anti-retour (7) et un deuxième clapet anti-retour (8), **caractérisé en ce que** le dispositif de préparation (2) est disposé entre le compresseur (5) et le premier et le deuxième clapet anti-retour (7, 8).

2. Dispositif d'alimentation en air (1) selon la revendication 1, **caractérisé en ce que** la conduite d'amenée d'air (3) et la conduite de sortie d'air (4) sont connectées au dispositif de préparation (2) dans une conduite de dérivation commune (10).

3. Dispositif d'alimentation en air (1) selon les revendications 1 ou 2, **caractérisé en ce que** le dispositif de préparation (2) pour l'air sortant est réalisé sous forme de silencieux.

4. Dispositif d'alimentation en air (1) selon au moins l'une quelconque des revendications précédentes, **caractérisé en ce que** le dispositif de préparation (2) se compose d'un matériau en mousse.

5. Dispositif d'alimentation en air (1) selon au moins l'une quelconque des revendications précédentes, **caractérisé en ce que** le compresseur (5) et un dispositif de séchage d'air (6) sont réalisés sous forme d'ensemble modulaire (12).

6. Dispositif d'alimentation en air (1) selon au moins l'une quelconque des revendications précédentes, **caractérisé en ce que** l'ensemble modulaire (12) présente un raccord commun pour la conduite d'amenée d'air (3) et la conduite de sortie d'air (4).

7. Dispositif d'alimentation en air (1) selon au moins l'une quelconque des revendications précédentes, **caractérisé en ce que** le dispositif de préparation (2) et le premier et le deuxième clapet anti-retour (7, 8) sont réalisés sous forme de module (11) dans un boîtier commun (14).

8. Dispositif d'alimentation en air (1) selon au moins l'une quelconque des revendications précédentes, **caractérisé en ce que** le compresseur (5) et le dispositif de séchage d'air (6) sont réalisés avec le dispositif de préparation (2) ou avec le module (11) sous forme d'ensemble modulaire (12).

9. Dispositif d'alimentation en air (1) selon au moins l'une quelconque des revendications précédentes, **caractérisé en ce que** le premier et le deuxième clapet anti-retour (7, 8) sont sollicités par une force de fermeture

10. Procédé pour l'alimentation en air comprimé d'un ressort pneumatique (9) d'un véhicule, dans lequel l'air à acheminer au ressort pneumatique (9) est aspiré par une conduite d'amenée d'air (3), est acheminé par un premier clapet anti-retour (7) à un dispositif de préparation (2) servant de filtre à air et/ou de silencieux, est ensuite comprimé par un compresseur (5) et finalement est déshumidifié dans un dispositif de séchage d'air (6), et dans lequel l'air devant être évacué hors du ressort pneumatique (9) circule d'abord à travers le dispositif de séchage d'air (6) pouvant fonctionner en mode de régénération, contourne ensuite le compresseur (5) par le biais d'une dérivation (13) pouvant être coupée et est détendu dans l'environnement par un dispositif de préparation (2) agissant en tant que silencieux par le biais d'un deuxième clapet anti-retour (8).
